# EUROPÄISCHE PATENTSCHRIFT

(11) **EP 1 260 412 B1**
(45) Veröffentlichungstag und Bekanntmachung des Hinweises auf die Patenterteilung: **19.05.2010**
(21) Anmeldenummer: 02005005.0
(22) Anmeldetag: 06.03.2002
(51) Int. Cl.: B60R 11/02

(54) **Bedienteil für eine Fahrerinformationsvorrichtung**
Operating module for a driver information device
Module de commande d'un dispositif fournissant des informations au conducteur

(30) Priorität: 23.05.2001 DE 10125062
(43) Veröffentlichungstag der Anmeldung: 27.11.2002
(73) Patentinhaber: ROBERT BOSCH GMBH, 70442 Stuttgart (DE)
(72) Erfinder: Strohmeier, Wolfgang, 31137 Hildesheim (DE)

(56) Entgegenhaltungen:
- DE-A- 4 228 605
- DE-A- 19 803 178
- US-A- 5 086 510
- PATENT ABSTRACTS OF JAPAN vol. 012, no. 267 (M-722), 26. Juli 1988 (1988-07-26) & JP 63 049566 A (ALPINE ELECTRON INC), 2. März 1988 (1988-03-02)

## Beschreibung

### Stand der Technik

Die Erfindung geht aus von einem Bedienteil für eine Fahrerinformationsvorrichtung nach der Gattung des Hauptanspruchs. Zur Bedienung von Fahrerinformationvorrichtungen in Kraftfahrzeugen, z.B. von Autoradios, Navigationssystemen, Autotelefonen oder Verbindungen dieser Geräte, sind Bedieneinheiten bekannt, die durch Zuweisung verschiedener Zeichen zu einer Taste oder durch eine Buchstabenauswahl aus einer Liste eine Texteingabe auf kleinem Raum ermöglichen. Ferner sind Spracheingabeverfahren bekannt, wobei mittels einer Spracherkennung Daten in die Fahrerinformationsvorrichtung in dem Fahrzeug eingegeben werden. Die Bedienung solcher Geräte muss jeweils von einem Benutzer zunächst erlernt werden und ist zeitaufwendig. Aus der DE 198 03 178 ist eine Radiobedieneinheit für ein Kraftfahrzeug bekannt, bei der ein sogenannter PDA (Personal Digital Assistant) als ein abnehmbares Bedienteil auf eine Vorderseite eines Autoradios aufgesetzt wird. Das Bedienteil weist eine berührungsempfindliche Touch-Screen-Eingabe auf, über die sowohl das Autoradio als auch die PDA-Funktionen steuerbar sind.

Aus der DE 422 86 05 A1 ist ein mobiles Kommunikationsgerät mit einem Notebook-Computer bekannt, der ein an dem Computergehäuse schwenkbar angeordnetes Display umfasst. Auf der Sichtfläche des Displays werden die Daten eines eingestellten Rundfunkempfängers dargestellt. Der Rundfunkempfänger kann leicht aus einem Fahrzeug ein- und ausgebaut werden. Zwischen dem Display und dem Gehäuse des Kommunikationsgerätes sind Gelenklager für ein Schwenken der Anzeige gegenüber dem Autoradio von 270° vorgesehen.

Aus der DE 198 03 178 A1 ist ein Autoradio mit einem abnehmbaren Bedienteil bekannt, dass mit einem Display, einem Mikroprozessor und elektronischen Speichern sowie einer Datenschnittstelle ausgestattet ist.

### Vorteile der Erfindung

Das erfindungsgemäße Bedienteil mit den Merkmalen des Hauptanspruchs hat demgegenüber den Vorteil, dass das Bedienteil zwei Klappen aufweist, wobei die eine Klappe in die Fahrerinformationsvorrichtung schiebbar ist und damit eine sichere Halterung des Bedienteils gewährleistet. Ferner ist diese Klappe nach einer Entnahme aus der Halterung auf den an der zweiten Klappe angeordneten Bildschirm klappbar, so dass das Bedienteil zusammengeklappt und der vorzugsweise als eine Flüssigkristallzelle ausgeführte Bildschirm an der zweiten Klappe nach der Entnahme des Bedienteils aus dem Fahrzeug geschützt ist, so dass eine Beschädigung des empfindlichen Bildschirms vermieden wird.

Durch die in den Unteransprüchen aufgeführten Maßnahmen sind vorteilhafte Weiterbildungen und Verbesserungen des im Hauptanspruch angegebenen Bedienteils möglich. Besonders vorteilhaft ist, an der ersten Klappe eine Tastatur anzuordnen. Hierdurch wird es einem Benutzer nach einer Entnahme des Bedienteils ermöglicht, längere Textinformationen, so z.B. elektronische Post, SMS-Nachrichten, Aufrufe von Internetseiten oder eine Programmierung von Fahrzeugfunktionen und/oder Funktionen der Fahrerinformationsvorrichtung bequem einzugeben. In einem in die Fahrerinformationsvorrichtung eingeschobenen Zustand hingegen ist die Tastatur nicht sichtbar. Statt dessen ist eine Bedienung der Fahrerinformationsvorrichtung über den Bildschirm möglich. Eine einfache Eingabe wird über die Anordnung einer herkömmlichen Schreibmaschinentastatur mit zumindest den Buchstaben des Alphabets bzw. den Ziffern von 0 bis 9 gewährleistet. Eine einfache Bedienung der Fahrerinformationsvorrichtung ist vor allem bei einer berührungsempfindlichen Ausführung des Bildschirms möglich, der in einem bevorzugten Ausführungsbeispiel in einem eingeschobenen Zustand sichtbar bleibt, während die erste Klappe mit der Tastatur in die Fahrerinformationsvorrichtung eingeschoben wird. Indem ein zusätzliches Tastenfeld angeboten wird, kann die Fläche für den Bildschirm vergrößert werden und daher entsprechend eine Benutzerinformation besser lesbar dargestellt werden, ohne eine größere Einbaufläche für die Fahrerinformationsvorrichtung selbst vorzusehen.

Weiterhin ist vorteilhaft, das Bedienteil als einen unabhängigen, mobilen Computer auszuführen, der getrennt von dem Fahrzeug betreibbar ist. Dadurch wird insbesondere die Akzeptanz für einen Benutzer erhöht, das Bedienteil mitzunehmen, wodurch ein Diebstahlschutz gewährleistet wird, da das Radio ohne das Bedienteil für einen Benutzer nicht bedienbar ist. Dabei ist insbesondere vorteilhaft, das Bedienteil auch als Bedienung für andere Fahrzeugfunktionen, z.B. als eine Vorrichtung zum Öffnen und Verriegeln des Fahrzeugs, zu nutzen.

Weiterhin ist vorteilhaft, durch die zweite Klappe ein Datenträgerlaufwerk abzudecken, da hierdurch weiterer Platz im Fahrzeug gespart werden kann und zugleich das Datenträgerlaufwerk vor Verschmutzung geschützt ist.

Weiterhin ist vorteilhaft, dass die erste Klappe gegenüber der zweiten Klappe in einer vorgebbaren Winkelstellung einrastbar ist. Hierdurch kann einerseits eine sichere Abdeckung des Bildschirms durch die erste Klappe, eine gute Ablesbarkeit einer Eingabe in den Bildschirm mittels der Tastatur und drittens eine stabile Halterung der zweiten Klappe gegenüber der ersten Klappe in einem eingeschobenen Zustand gewährleistet werden.

### Zeichnung

Ausführungsbeispiele der Erfindung sind in der Zeichnung dargestellt und in der nachfolgenden Beschreibung näher erläutert. Es zeigen: Figur 1, ein Ausführungsbeispiel für eine erfindungsgemäße Fahrerinformationsvorrichtung in Verbindung mit einem erfindungsgemäßen Bedienteil. Figuren 2a und 2b, ein erfindungsgemäßes Bedienteil in einem aufgeklappten Zustand, Figur 3, ein erfindungsgemäßes Bedienteil in einem zusammengeklappten Zustand, Figur 4, eine Aufsicht auf eine erfindungsgemäße Fahrerinformationsvorrichtung, Figur 5, ein erfindungsgemäßes Bedienteil vor Einschieben in eine erfindungsgemäße Fahrerinformationsvorrichtung, Figur 6, eine Anzeige auf dem Bildschirm eines erfindungsgemäßen Bedienteils nach Einschieben in die Fahrerinformationsvorrichtung.

### Beschreibung des Ausführungsbeispiels

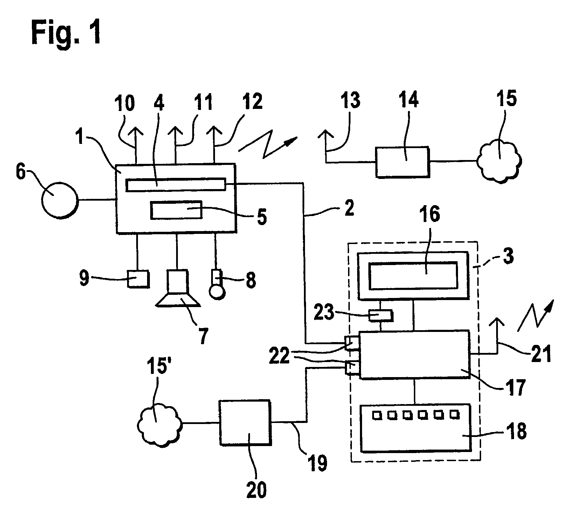

In der Figur 1 ist eine Fahrerinformationsvorrichtung 1 dargestellt, die über eine Datenverbindung 2 mit einem Bedienteil 3 verbunden ist. Die Fahrerinformationsvorrichtung weist einen Schacht 4 auf, von dem das Bedienteil 3 zumindest teilweise aufgenommen werden kann. Die Fahrerinformationsvorrichtung weist eine Recheneinheit 5 zur Steuerung der Fahrerinformationsvorrichtung 1 auf. An die Fahrerinformationsvorrichtung 1 ist ein Datenträgerlaufwerk 6, ein Lautsprecher 7 und in einem bevorzugten Ausführungsbeispiel ein Mikrophon 8 zur Spracheingabe angeschlossen. Die Fahrerinformationsvorrichtung 1 ist mit Fahrzeugsensoren 9, z.B. einem Wegstreckenmesser, verbunden. Über eine erste Antenne 10 kann die Fahrerinformationsvorrichtung ein Radiosignal empfangen. Über eine zweite Antenne 11 sind Satellitensignale insbesondere zur Positionsbestimmung des Fahrzeugs empfangbar, in dem die Fahrerinformationsvorrichtung angeordnet ist. Über eine Funkschnittstelle 12, insbesondere eine Mobilfunkschnittstelle, erfolgt eine Funkverbindung zu einer Antenne 13 einer Dienstezentrale 14, die in einem bevorzugten Ausführungsbeispiel die Verbindung zu einem Datennetz 15, vorzugsweise dem Internet, herstellt. Das Bedienteil 3 weist einen Bildschirm 16, eine Recheneinheit 17 und eine Tastatur 18 auf. Neben der Datenverbindung 2 zu der Fahrerinformationsvorrichtung 1 weist das Bedienteil 3, insbesondere die Recheneinheit 17, eine weitere Datenverbindung 19 auf, über die eine weitere Recheneinheit 20 anschließbar ist, die ebenfalls zu einem Datennetz 15' z.B. vorzugsweise dem Internet, eine Datenverbindung herstellen kann. Über eine Funkschnittstelle 21, die z.B. als eine sogenannte Blue-Tooth-Schnittstelle ausgebildet ist, ist eine Funkverbindung zu der Fahrerinformationsvorrichtung, zu anderen Fahrzeugeinheiten und/oder zu einem Mobilfunknetz möglich. Zur Herstellung der Datenverbindungen 2, 19 sind Anschlusskontakte 22 an der Recheneinheit 17 angeordnet. Zur Spannungsversorgung für den Fall, dass das Bedienteil 3 von der Fahrerinformationsvorrichtung 1 abgenommen wird, ist in dem Bedienteil 3 ein Akkumulator 23 angeordnet. Der Akkumulator 23 ist vorzugsweise über eine in die Datenverbindung 2 integrierte Stromversorgungsleitung ladbar.

Die Fahrerinformationsvorrichtung 1 ist vorzugsweise als ein Autoradio ausgeführt. Statt dessen oder auch ergänzend können weitere Funktionen in die Fahrerinformationsvorrichtung 1 integriert werden, so z.B. eine Navigationsfunktion zur Führung eines Fahrers in einem Straßennetz, eine Mobiltelefoneinheit, über die eine Verbindung zu einem anderen Telefonnetzteilnehmer herstellbar ist oder eine Steuerungseinheit, die über Funktionen des Fahrzeugs informiert und eine Beeinflussung dieser Funktionen erlaubt, so z.B. eine Klimasteuerung im Fahrzeug. In einem bevorzugten Ausführungsbeispiel ist die Fahrerinformationsvorrichtung nur funktionsfähig, wenn das Bedienteil 3 in den Schacht 4 eingeschoben ist. Zusätzlich kann eine Sicherung über eine Eingabe eines Codes über das Bedienteil 3 erfolgen, um eine Funktion der Fahrerinformationsvorrichtung freizugeben. Eine Überprüfung, ob ein richtiges Bedienteil 3 in den Schacht 4 eingesetzt wird, kann durch Prüfung einer von der Fahrerinformationsvorrichtung 1 an die Anschlusskontakte 22 angelegten elektrischen Spannung erfolgen.

Anstelle der Anordnung zweier Mobilfunkschnittstellen an der Fahrerinformationsvorrichtung 1 und dem Bedienteil 3 kann auch entweder nur an der Fahrerinformationsvorrichtung 1 oder nur an dem Bedienteil 3 eine solche Mobilfunkschnittstelle angeordnet sein. Die Fahrerinformationsvorrichtung 1 ist vorzugsweise in einer Mittelkonsole des Fahrzeugs angeordnet. In einem weiteren Ausführungsbeispiel ist zu dem Innenraum des Fahrzeugs hin nur eine Haltevorrichtung für das Bedienteil 3 vorgesehen, während die Recheneinheit 5 der Fahrerinformationsvorrichtung mit anderen Komponenten an einer nicht direkt von außen zugänglichen Position des Fahrzeugs angeordnet ist, z.B. hinter einer Instrumententafel. Hierdurch wird zusätzlich eine unberechtigte Entnahme einer derartigen Fahrerinformationsvorrichtung aus einem Fahrzeug erschwert.

Der Bildschirm 16 des Bedienteils 3 ist vorzugsweise als ein sogenannter Touch-Screen-Monitor ausgeführt, an dem eine Berührung der Bildschirmfläche ortsabhängig erfasst wird, so dass eine Bedienung mittels gezielter Berührungen der Bildschirmfläche erfolgen kann. Zusätzlich dient der Bildschirm 16 zur Anzeige der über die Tastatur 18 eingegebenen Zeichenfolgen. Das Bedienteil 3 ist in einem bevorzugten Ausführungsbeispiel entsprechend der Funktionsweise eines herkömmlichen Notebooks ausgeführt und weist vorzugsweise ein Betriebssystem für Kleinrechner mit dazugehörigen Anwendungsprogrammen auf. Neben einer Bedienung der Fahrerinformationsvorrichtung 1 können diese Anwendungsprogramme unabhängig, auch nach einer Entnahme des Bedienteils 3 aus dem Schacht 4 verwendet werden. Eine Eingabe von Zeichen kann dabei bequem über eine alphanumerische Tastatur 18 erfolgen. Bei einem Einschieben des Bedienteils 3 in den Schacht 4 wird die Tastatur 18 gesperrt. Damit kann ein Fahrer während der Fahrt nicht durch die Eingabe in die Tastatur 18 abgelenkt werden. In diesem Fall stehen ihm die auf dem Bildschirm 16 angezeigten Symbole oder Zeichenketten zur Steuerung der Fahrerinformationsvorrichtung 1 zur Verfügung. Über den Anschluss an eine weitere Recheneinheit 20 können Eingaben auch bereits über die weitere, externe Recheneinheit 20 erfolgen, so dass z.B. eine geplante Fahrtroute bereits an einem herkömmlichen Computer eingegeben werden kann, die dann in dem Bedienteil 3 verarbeitet, an die Fahrerinformationsvorrichtung 1 übermittelt und gegebenenfalls durch eine Eingabe über die Tastatur 18 bzw. den Bildschirm 16 noch modifiziert werden kann.

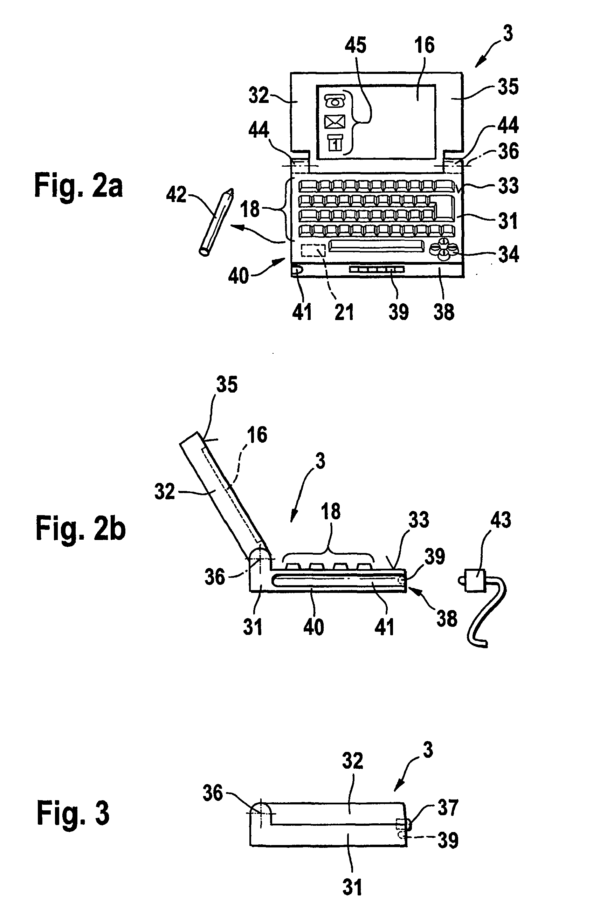

In der Figur 2a ist ein Ausführungsbeispiel für ein erfindungsgemäßes Bedienteil 3 dargestellt. Das Bedienteil 3 weist eine erste Klappe 31 und eine zweite Klappe 32 auf. An der ersten Klappe 31 ist an einer ersten Oberfläche 33 eine alphanumerische Tastatur 18 angeordnet, wie sie z.B. bei Schreibmaschinen oder Computern üblich ist. Zusätzlich können Pfeiltasten 34 zur Cursorsteuerung in dem Bildschirm 16 vorgesehen sein. In dem Bildschirm werden z.B. Symbole 45 für verschiedene Funktionen des als PDA ausgeführten Bedienteils 3 dargestellt. Über ein Telefonsymbol sind z.B. gespeicherte Telefonnummern, über ein Briefsymbol gespeicherte Adressen und über ein Kalendersymbol eine Terminplanerfunktion abrufbar. Der Bildschirm 16 ist an einer ersten Oberfläche 35 der zweiten Klappe 32 angeordnet. Um eine Drehachse 36 ist die zweite Klappe 32 gegenüber der ersten Klappe 31 bewegbar. Dabei kann die zweite Klappe 32 auf die erste Klappe 31 geklappt werden, so dass die erste Oberfläche 33 der ersten Klappe 31 auf der ersten Oberfläche 35 der zweiten Klappe 32 aufliegt. Damit wird der Bildschirm 16 durch die erste Klappe 31 abgedeckt. Ferner wird die Tastatur 18 durch die zweite Klappe 32 abgedeckt. Dies ist in der Figur 3 dargestellt, in der die zweite Klappe 32 auf der ersten Klappe 31 aufliegt. Hierdurch sind sowohl die Tastatur 18 als auch der Bildschirm 16 vor einer unbeabsichtigten Berührung während eines Transportes des Bedienteils 3 nach einer Entnahme aus dem Fahrzeug geschützt. Hierdurch ist der Bildschirm 16, der in einem bevorzugten Ausführungsbeispiel aus einer Flüssigkristallzelle gefertigt ist, gegen Beschädigungen geschützt, da Flüssigkristallzellen durch unbeabsichtigte Berührungen mit scharfen Gegenstände zerkratzt oder gar zerstört werden können. Durch sowohl an der erste Klappe 31 als auch an der zweiten Klappe 32 vorzugsweise verdeckt angeordneten Magnete 37 wird in einem zusammengeklappten Zustand der Bedieneinheit 3 die zweite Klappe 32 an der ersten Klappe 31 gehalten. Dies ist in der Figur 3 dargestellt. Erst bei einer hinreichend auf die beiden Klappen einwirkenden Kraft erfolgt eine Öffnung der Klappen 31, 32. In einem weiteren Ausführungsbeispiel ist auch ein Einrasten in der Drehachse 36 oder in jeweils an den Klappen angeordneten Rasthaken möglich. An einer Schmalseite 38 der ersten Klappe 31 sind elektrische Kontakte 39 angeordnet, die einer elektrischen Verbindung des Bedienteils 3 dienen. An die elektrischen Kontakte 39 ist mit einem geeigneten Stecker eine weitere Recheneinheit 20 anschließbar. Ferner kann bei einem Einschieben der ersten Klappe 31 in den Schacht 4 der Fahrerinformationsvorrichtung 1 über in dem Schacht 4 angeordnete Kontakte eine elektrische Verbindung von der Fahrerinformationsvorrichtung 1 zu dem Bedienteil 3 hergestellt werden. Die elektrischen Kontakte dienen einerseits der elektrischen Spannungsversorgung des Bedienteils 3 und andererseits dem Datentransfer. Ein Datentransfer ist auch über eine vorzugsweise in dem Bedienteil 3 verdeckt angeordnete Funkschnittstelle 21 möglich. An einer zweiten Schmalseite 40 ist in einer Vertiefung 41 ein Kunststoffstift 42 verrastbar angeordnet, der bei einer Verwendung des Bedienteils 3 als ein Notebook bzw. als ein Kleincomputer zur gezielten Eingabe von Daten in den als Touch-Screen-Bildschirm ausgeführten Bildschirm 16 dient.

In der Figur 2b ist eine Seitenansicht des Bedienteils 3 gemäß dem anhand der Figur 2a erläuterten Ausführungsbeispiel dargestellt. In einem Bereich der Drehachse 36 erhebt sich die erste Klappe 31 mit angeformten Erweiterungen 44 über ihre erste Oberfläche 33 und umfasst seitlich die zweite Klappe 32 mit den Erweiterungen 44, so dass eine Drehachse durch die Erweiterungen 44 und die zweite Klappe 32 verläuft. Ein Stecker 43 ist an die elektrischen Kontakte 39 führbar und in einer Öffnung für die elektrischen Kontakte 39 verrastbar. Für eine Eingabe von Daten mittels der Tastatur 18 ist die zweite Klappe 32 gegenüber der ersten Klappe 31 vorzugsweise in einem Winkel von 120° zwischen der ersten Oberfläche 33 der ersten Klappe 31 und der ersten Oberfläche 35 der zweite Klappe 32 verrastbar. Hierdurch ist für einen Benutzer des Bedienteils 3 eine optimale Ablesbarkeit des Bildschirms 16 gegeben. Eine Verrastung erfolgt vorzugsweise in der Drehachse 36. Das Gehäuse des Bedienteils 3 ist vorzugsweise aus einem Kunststoffmaterial ausgeführt. Die Tastatur 18 ist in einem ersten Ausführungsbeispiel als eine Folientastatur und in einem zweiten Ausführungsbeispiel als eine Tastatur aus einzeln ausgeformten Tasten ausgeführt. Ferner ist auch eine Ausführung der Bedieneinheit 3 mit einem Metallgehäuse möglich.

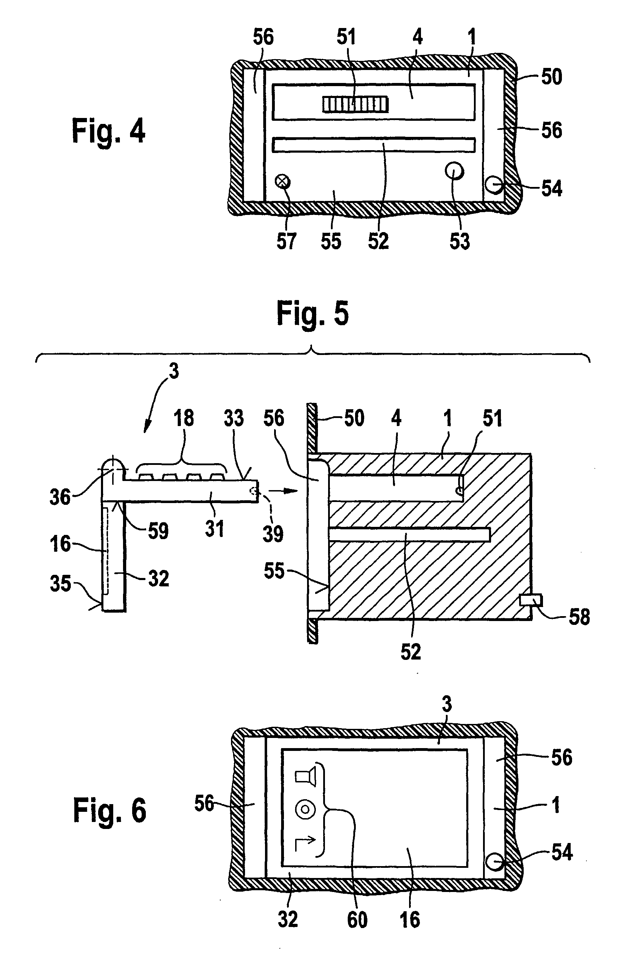

In der Figur 4 ist eine Ansicht einer erfindungsgemäßen Fahrerinformationsvorrichtung 1 dargestellt, die in eine Öffnung einer Mittelkonsole 50 eines Kraftfahrzeugs eingeführt ist. Bei der Darstellung gemäß der Figur 4 ist das Bedienteil nicht auf die Fahrerinformationsvorrichtung 1 aufgesetzt. In dem Schacht 4 sind elektrische Kontakte 51 angeordnet, die das Gegenstück zu den elektrischen Kontakten 39 an der ersten Klappe 31 darstellen. Unterhalb des Schachts 4 ist ein Datenträgerlaufwerk 52 zur Aufnahme eines Datenträgers, vorzugsweise eines magnetischen und/oder optischen Datenträgers, z.B. eine Compact Disc, in die Fahrerinformationsvorrichtung 1 angeordnet. Über einen Bedienknopf 53 ist der Datenträger aus dem Datenträgerlaufwerk 52 auswerfbar. Das Bedienteil 3 ist über in der Figur 4 nicht dargestellte Rastvorrichtungen, die vorzugsweise an den elektrischen Kontakten 51 angeordnet sind, in der Fahrerinformationsvorrichtung 1 verrastbar. Eine Lösen dieser Rastvorrichtungen ist über eine Softwaresteuerung mittels des Bedienteils 3 möglich. Auch kann ein Herauslösen des Bedienteils 3 aus der Fahrerinformationsvorrichtung 1 durch eine Betätigung des Druckknopfs 54 erfolgen. Auf einer Aufnahmefläche 55, die von Rändern 56 umgeben wird, die sich über die Aufnahmefläche 55 erheben, ist eine Leuchtdiode 57 angeordnet, die bei einem herausgenommenen Bedienteil 3 selbständig beginnt, zu blinken. Hierdurch wird ein möglicher Dieb darauf hingewiesen, dass ein Bedienteil 3 entnommen und die Fahrerinformationsvorrichtung 1 somit für ihn wertlos ist.

In der Figur 5 ist eine erfindungsgemäße Fahrerinformationsvorrichtung 1 eingebaut in eine Mittelkonsole 50 eines Kraftfahrzeugs in einer Seitenansicht dargestellt. Über eine Schnittstelle 58 tritt die Fahrerinformationsvorrichtung 1 in Kontakt zu einer Spannungsversorgung und zu anderen, im Fahrzeug angeordneten Baugruppen, die anhand der Figur 1 erläutert wurden. Die Bedieneinheit 3 ist mit der ersten Klappe 31 in den Schacht 4 einschiebbar. Der Winkel zwischen der ersten Oberfläche 33 und der ersten Oberfläche 35 beträgt nun 270°. Durch einen an die erste Klappe 31 angeformten Anschlag 59 wird ein weiteres Umbiegen der zweiten Klappe 32 gegenüber der ersten Klappe 31 verhindert.

Eine Darstellung in dem Bildschirm 16 zur Steuerung der Fahrerinformationsvorrichtung erfolgt bei einer in den Schacht 4 eingeschobenen ersten Klappe 31 gegenüber einer Darstellung bei einem Betrieb gemäß der Figur 2a, also bei einer Eingabe über die Tastatur 18, auf dem Bildschirm 16 um 180° gedreht, um eine korrekte Ablesbarkeit für einen Benutzer der Fahrerinformationsvorrichtung zu gewährleisten. D.h. Buchstaben und Zeichen werden gegenüber der Darstellung in der Betriebsart bei einer Bedienung über die Tastatur 18 auf dem Kopf dargestellt. Die elektrischen Kontakte 39 sind an den elektrischen Kontakten 51 einrastbar. Die Drehung der Anzeigendarstellung wird dabei vorzugsweise nach der Kontakterstellung automatisch vorgenommen und nach einer Entnahme des Bedienteils, also nach Lösen der elektrischen Kontakte, automatisch rückgängig gemacht. Vorzugsweise schaltete bei der Kontakterstellung das Bedienteil 3 automatisch auf eine Benutzersteuerung der Fahrerinformationsvorrichtung um, indem ein Menü mit auswählbaren Funktionen für diese angezeigt wird. Durch die Anordnung auf der Aufnahmefläche 55, die eine Vertiefung gegenüber der Oberfläche der Mittelkonsole 50 bildet, ragt das Bedienteil 3 nicht über eine Oberfläche der Mittelkonsole 50 hinaus und fügt sich damit störungsfrei in eine Optik der Instrumententafel in dem Fahrzeug ein.

In der Figur 6 ist das Bedienteil 3 eingebaut in die Fahrerinformationsvorrichtung 1 dargestellt. Auf dem Bildschirm 16 sind Symbole 60 zur Steuerung der Fahrerinformationsvorrichtung 1 dargestellt, die sich z.B. auf eine Radiowiedergabe, auf eine Musikdatenträgerwiedergabe oder eine Fahrzeugnavigation beziehen. Zum Einlegen eines Datenträgers in das Datenträgerlaufwerk 52 ist die zweite Klappe 32 anhebbar, während die erste Klappe 31 in dem Schacht 4 verrastet bleibt. Durch in der Figur 6 nicht dargestellte Magnete oder Rastelemente ist dabei die zweite Klappe 32 gegenüber der Fahrerinformationsvorrichtung 1 verrastet.

## Patentansprüche

1. Bedienteil für eine Fahrerinformationsvorrichtung insbesondere in einem Kraftfahrzeug, wobei an dem Bedienteil ein Bildschirm angeordnet ist, wobei das Bedienteil von der Fahrerinformationsvorrichtung abnehmbar ist, wobei das Bedienteil (3) eine erste Klappe (31) und eine zweite Klappe (32) aufweist, wobei an der ersten Klappe (31) eine Tastatur (18) angeordnet ist und wobei der Bildschirm (16) an der zweiten Klappe (32) angeordnet ist, **dadurch gekennzeichnet, dass** die erste Klappe (31) in einen Schacht (4) der Fahrerinformationsvorrichtung (1) einschiebbar ist, dass bei einer in den Schacht (4) eingeschobenen ersten Klappe (31) eine Darstellung auf dem Bildschirm um 180° gedreht wird, dass nach einer Entnahme der ersten Klappe aus dem Schacht die Drehung rückgängig gemacht wird und dass der Bildschirm (16) nach einem Herausnehmen des Bedienteils aus der Fahrerinformationsvorrichtung (1) durch die erste Klappe (31) abdeckbar ist.

2. Bedienteil nach Anspruch 1, **dadurch gekennzeichnet, dass** die Tastatur (18) zumindest die Buchstaben des Alphabets und/oder die Ziffern von 0 bis 9 aufweist.

3. Bedienteil nach einem der vorhergehenden Ansprüche,
**dadurch gekennzeichnet, dass** das Bedienteil (3) und/oder die Fahrerinformationsvorrichtung (1) über eine Berührung des Bildschirms (16) des Bedienteils (3) steuerbar sind.

4. Bedienteil nach einem der vorhergehenden Ansprüche,
**dadurch gekennzeichnet, dass** das Bedienteil (3) ein mobiler Computer ist und unabhängig von der Fahrerinformationsvorrichtung (1) betreibbar ist.

5. Bedienteil nach einem der vorhergehenden Ansprüche,
**dadurch gekennzeichnet, dass** das Bedienteil (3) über eine Schnittstelle (21, 22), vorzugsweise eine Funkschnittstelle, mit der Fahrerinformationsvorrichtung (1) verbindbar ist.

6. Bedienteil nach einem der vorhergehenden Ansprüche,
**dadurch gekennzeichnet, dass** das Bedienteil (3) mit einem Datennetz (15), vorzugsweise dem Internet verbindbar ist.

7. Bedienteil nach einem der vorhergehenden Ansprüche,
**dadurch gekennzeichnet, dass** durch die zweite Klappe (32) ein Datenträgerlaufwerk (52) der Fahrerinformationsvorrichtung (1) abdeckbar ist.

8. Bedienteil nach einem der vorhergehenden Ansprüche,
**dadurch gekennzeichnet, dass** die erste Klappe (31) gegenüber der zweiten Klappe (32) in mindestens einer vorgebbaren Winkelstellung einrastbar ist.

9. Fahrerinformationsvorrichtung für ein Kraftfahrzeug, insbesondere mit einem Autoradio, **dadurch gekennzeichnet, dass** die Fahrerinformationsvorrichtung (1) mit einem Bedienteil (3) nach einem der vorhergehenden Ansprüche bedienbar ist.

## Claims

1. Operator control part for a driver information apparatus, in particular in a motor vehicle, a screen being arranged on the operator control part, it being possible to detach the operator control part from the driver information apparatus, the operator control part (3) having a first flap (31) and a second flap (32), a keyboard (18) being arranged on the first flap (31), and the screen (16) being arranged on the second flap (32), **characterized in that** the first flap (31) can be inserted into a slot (4) in the driver information apparatus (1), **in that** a display on the screen is rotated through 180° when a first flap (31) is inserted into the slot (4), **in that** the rotation is reversed after the first flap is removed from the slot, and **in that** the screen (16) can be covered by the first flap (31) after the operator control part is removed from the driver information apparatus (1).

2. Operator control part according to Claim 1,
**characterized in that** the keyboard (18) has at least the letters of the alphabet and/or the numerals 0 to 9.

3. Operator control part according to either of the preceding claims, **characterized in that** the operator control part (3) and/or the driver information apparatus (1) can be controlled by touching the screen (16) of the operator control part (3).

4. Operator control part according to one of the preceding claims, **characterized in that** the operator control part (3) is a mobile computer and can be operated independently of the driver information apparatus (1).

5. Operator control part according to one of the preceding claims, **characterized in that** the operator control part (3) can be connected to the driver information apparatus (1) via an interface (21, 22), preferably a radio interface.

6. Operator control part according to one of the preceding claims, **characterized in that** the operator control part (3) can be connected to a data network (15), preferably to the Internet.

7. Operator control part according to one of the preceding claims, **characterized in that** a data storage medium drive (52) of the driver information apparatus (1) can be covered by the second flap (32).

8. Operator control part according to one of the preceding claims, **characterized in that** the first flap (31) can latch in relative to the second flap (32) in at least one predefinable angular position.

9. Driver information apparatus for a motor vehicle, in particular having a car radio, **characterized in that** the driver information apparatus (1) can be operated by an operator control part (3) according to one of the preceding claims.

## Revendications

1. Elément de commande pour un dispositif d'information du conducteur, en particulier dans un véhicule automobile, un écran étant disposé sur l'élément de commande, l'élément de commande pouvant être enlevé du dispositif d'information de conducteur, l'élément de commande (3) présentant un premier clapet (31) et un deuxième clapet (32), un clavier (18) étant disposé sur le premier clapet (31) et l'écran (16) étant disposé sur le deuxième clapet (32),
**caractérisé en ce que**
le premier clapet (31) peut être inséré dans un logement (4) du dispositif (1) d'information du conducteur,
**en ce que** lorsque le premier clapet (31) a été enfoncé dans le logement (4), la présentation affichée sur l'écran est tournée de 180°,
**en ce qu'**après enlèvement du premier clapet hors du logement, la rotation est inversée et
**en ce qu'**après que l'élément de commande a été retiré du dispositif (1) d'information du véhicule, l'écran (16) peut être recouvert par le premier clapet (31).

2. Elément de commande selon la revendication 1, **caractérisé en ce que** le clavier (18) présente au moins les lettres de l'alphabet et/ou les chiffres de 0 à 9.

3. Elément de commande selon l'une des revendications précédentes, **caractérisé en ce que** l'élément de commande (3) et/ou le dispositif (1) d'information du conducteur peuvent être commandés en touchant l'écran (16) de l'élément de commande (3).

4. Elément de commande selon l'une des revendications précédentes, **caractérisé en ce que** l'élément de commande (3) est un ordinateur mobile qui peut fonctionner indépendamment du dispositif (1) d'information du conducteur.

5. Elément de commande selon l'une des revendications précédentes, **caractérisé en ce que** l'élément de commande (3) peut être relié au dispositif (1) d'information du conducteur par une interface (21, 22), de préférence une interface radio.

6. Elément de commande selon l'une des revendications précédentes, **caractérisé en ce que** l'élément de commande (3) peut être relié à un réseau de données (15) et de préférence à l'Internet.

7. Elément de commande selon l'une des revendications précédentes, **caractérisé en ce qu'**un lecteur (52) de support de données du dispositif (1) d'information du conducteur peut être recouvert par le deuxième clapet (32).

8. Elément de commande selon l'une des revendications précédentes, **caractérisé en ce que** le premier clapet (31) peut être encliqueté en au moins une position angulaire prédéterminée par rapport au deuxième clapet (32).

9. Dispositif d'information du conducteur d'un véhicule automobile, en particulier doté d'un autoradio, **caractérisé en ce que** le dispositif (1) d'information du conducteur peut être commandé à l'aide d'un élément de commande (3) selon l'une des revendications précédentes.
